# EUROPEAN PATENT APPLICATION

(11) **EP 4 748 761 A1**
(43) Date of publication of application: **27.05.2026**
(21) Application number: 24843052.2
(22) Date of filing: 11.07.2024
(51) Int. Cl.: B65G 57/03

(54) **STACKING DEVICE**

(30) Priority: 19.07.2023 JP 2023117780
(71) Applicant: Nabel Co., Ltd., Kyoto-shi, Kyoto 601-8444 (JP)
(72) Inventor: NAMBU, Takahiko, Kyoto-shi, Kyoto 601-8444 (JP)
(74) Representative: Müller Hoffmann & Partner
(86) International application number: PCT/JP2024/025101
(87) International publication number: WO 2025/018261

(57) **Abstract**

The present invention enables stacking of trays without stopping lines of a tray carry-in unit and the like even when an abnormality of the tray is detected. The present invention includes: a tray carry-in unit 2 that carries in a tray T containing a plurality of eggs E; a stacking unit 3 that stacks, in a predetermined number of layers, the tray T carried in by the tray carry-in unit 2; a tray carry-out unit 4 that carries out the tray T stacked by the stacking unit 3 in a predetermined number of layers; and an abnormality detection unit 5 that detects an abnormality of the tray T carried into the stacking unit 3. When the abnormality detection unit 5 detects an abnormality of the tray T, the tray T in which the abnormality is detected is arranged at an uppermost layer by the stacking unit 3 and is carried out by the tray carry-out unit 4, regardless of whether or not the tray T is stacked in a predetermined number of layers.

## Description

### Technical Field

The present invention relates to a stacking device for stacking trays containing a plurality of eggs.

### Background Art

As a stacking device of this type, as shown in Patent Literature 1, there is a stacking device including a carrying conveyor for carrying trays, a stacking conveyance mechanism for stacking trays, and a delivery conveyor for delivering the stacked trays. Then, the stacking conveyance mechanism stacks the tray located at a receiving position of the carrying conveyor, by placing the tray directly at a stacking position of the delivery conveyor or on another tray placed at the stacking position. Thereafter, the trays stacked in a predetermined number of layers are delivered by the delivery conveyor.

Meanwhile, if a tray having an abnormality such as missing egg (missing content) is stacked, a defect occurs in a subsequent process. Therefore, an abnormality detection unit that detects an abnormality of the tray is provided in the carrying conveyor. If the abnormality detection unit detects an abnormality, the carrying conveyor is stopped, and work for removing the tray having an abnormality is performed.

However, it is necessary for an operator to move to the carrying conveyor every time an abnormality is detected, and it is necessary to restart the conveyor after removing the tray having the abnormality, which causes time and effort of the operator. Furthermore, since the carrying conveyor is stopped and restarted every time an abnormality is detected, an operation rate of the stacking device is lowered.

### Citation List

### Patent Literature

Patent Literature 1: JP 2002-284349 A

### Summary of Invention

### Technical Problem

Therefore, the present invention has been made to solve the above problem, and an object thereof is to enable stacking of trays without stopping lines of a tray carry-in unit and the like even when an abnormality of the tray is detected.

### Solution to Problem

That is, a stacking device according to the present invention includes: a tray carry-in unit that carries in a tray containing a plurality of eggs; a stacking unit that stacks, in a predetermined number of layers, the tray carried in by the tray carry-in unit; a tray carry-out unit that carries out the tray stacked by the stacking unit in a predetermined number of layers; and an abnormality detection unit that detects an abnormality of the tray carried into the stacking unit, in which when the abnormality detection unit detects an abnormality of the tray, the tray in which the abnormality is detected is arranged at an uppermost layer by the stacking unit and is carried out by the tray carry-out unit, regardless of whether or not the tray has been stacked in a predetermined number of layers.

In this stacking device, since the tray in which an abnormality is detected is arranged at the uppermost layer and carried out, the stacking of the trays can be continuously performed without stopping lines of the tray carry-in unit, the tray carry-out unit, and the like. In addition, since the lines of the tray carry-in unit, the tray carry-out unit, and the like are not stopped at the time of abnormality detection, an operation rate is improved. Furthermore, it is not necessary for an operator to move to the tray carry-in unit and remove the tray having an abnormality from the tray carry-in unit, and time and effort are saved. In addition, since the tray in which an abnormality is detected is arranged at the uppermost layer, the tray in which the abnormality is detected can be dealt with in the stacked state, and workability is improved.

The stacking unit may stack the tray carried in by the tray carry-in unit, by arranging the tray on the tray that is carried in immediately before.

With this configuration, since the stacking unit is configured to stack the carried-in tray on the tray that is carried in immediately before, it is not necessary to change the stacking operation even for the tray in which the abnormality is detected. Further, with this configuration, it is only required to change control contents of an existing stacking device. Advantageous Effects of Invention

According to the present invention configured as described above, even when an abnormality of the tray is detected, it is possible to stack the tray without stopping the lines of the tray carry-in unit and the like.

### Brief Description of Drawings

FIG. 1 is a front view schematically illustrating a configuration of a stacking device according to an embodiment of the present invention.
FIG. 2 is a schematic diagram illustrating a forced discharge operation in a case where there is an abnormality in a first layer in the embodiment.
FIG. 3 is a schematic diagram illustrating a forced discharge operation in a case where there is an abnormality in the second and subsequent layers in the embodiment.

### Description of Embodiment

Hereinafter, an embodiment of a stacking device according to the present invention will be described with reference to the drawings.

Note that, any of the figures shown below is schematically drawn with appropriate omission or exaggeration for easy understanding. The same components are denoted by the same reference numerals, and a description thereof will be omitted as appropriate.

### <Configuration of stacking device 100>

A stacking device 100 of the present embodiment stacks a predetermined number (for example, six) of trays T containing a plurality of eggs E.

Here, the tray T is, for example, a synthetic resin American tray having egg seats of five rows and six columns, but various trays such as a pulp mold tray can be used.

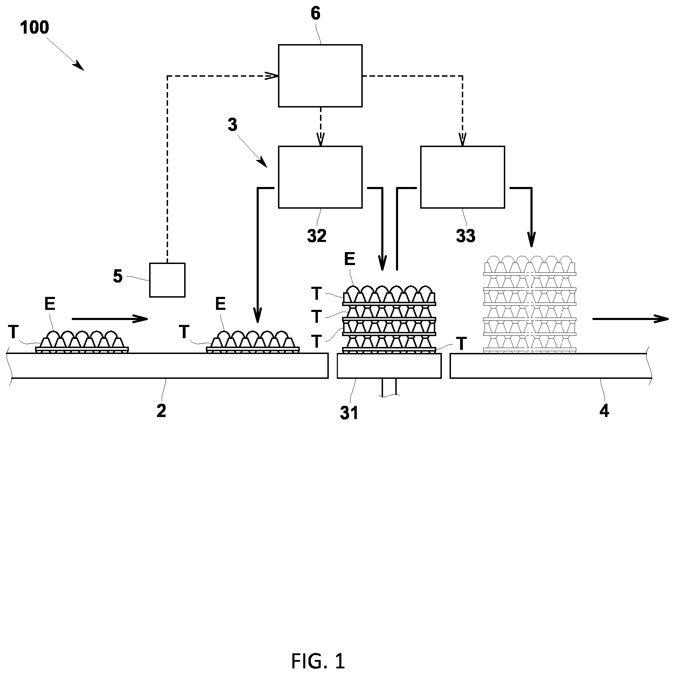

Specifically, as illustrated in FIG. 1, the stacking device includes a tray carry-in unit 2, a stacking unit 3, a tray carry-out unit 4, an abnormality detection unit 5, and a control unit 6.

The tray carry-in unit 2 carries the tray T containing the plurality of eggs E into the stacking unit 3. Specifically, the tray carry-in unit 2 is a belt conveyor for conveying the tray T.

A conveyor (not illustrated) of a preceding process is connected to an upstream end of the tray carry-in unit 2, and the tray T containing the eggs E is supplied. Note that, to the upstream end of the tray carry-in unit 2, an operator can also supply the tray T containing the eggs E.

The stacking unit 3 stacks a predetermined number (for example, six) of the trays T carried in by the tray carry-in unit 2. The stacking unit 3 of the present embodiment stacks the trays T carried in by the tray carry-in unit 2, by arranging the tray T on the tray T that is carried in immediately before.

Specifically, the stacking unit 3 includes a stacking stage 31 on which the tray T is placed and stacked, a tray moving unit 32 that moves the tray T from the tray carry-in unit 2 to the stacking stage 31 to stack the tray T, and a stacked-tray moving unit 33 that moves the tray T stacked in a predetermined number of layers on the stacking stage 31 to the tray carry-out unit 4.

The tray moving unit 32 supports and lifts a peripheral edge of the tray T to move the tray T to an upper surface of the stacking stage 31 or an uppermost layer of the trays T placed on the stacking stage 31.

The stacked-tray moving unit 33 includes a pushing member (not illustrated) that pushes out the stacked trays T to the tray carry-out unit 4. A moving mechanism of the pushing member of the stacked-tray moving unit 33 may be configured using a moving mechanism of the tray moving unit 32. Note that, the stacked-tray moving unit 33 may be configured to move the stacked trays T from the stacking stage 31 to the tray carry-out unit 4 by lifting the stacked trays T.

Here, the stacking stage 31 may be configured to descend by an amount of one tray every time the tray T is stacked one by one by the tray moving unit 32. In this case, the stacking stage 31 descends until a predetermined number of trays T are stacked, and ascends to an initial position after the predetermined number of trays T are stacked. In this state, the stacked-tray moving unit 33 moves the stacked trays T to the tray carry-out unit 4 by pushing the stacked trays T. Note that, the initial position is substantially the same height position as a height position of a belt conveyor of the tray carry-out unit 4.

In addition, in a case of trays T that can be stacked by changing a direction of one tray T in a horizontal direction by, for example, 90 degrees at the time of stacking the trays T, the stacking unit 3 has a function of rotating the tray T in the horizontal direction. Further, the tray carry-in unit 2 may be provided with a function of rotating the tray T in the horizontal direction.

The tray carry-out unit 4 carries out the trays T stacked in a predetermined number of layers by the stacking unit 3, from the stacking unit 3. Specifically, the tray carry-out unit 4 is a belt conveyor for conveying the stacked trays T.

A conveyor (not illustrated) in a subsequent process is connected to a downstream end of the tray carry-out unit 4, and the stacked trays T are supplied to the next process. Note that, the operator can take out the stacked trays T from the downstream end of the tray carry-out unit 4.

The abnormality detection unit 5 detects an abnormality of the tray T that is carried in by the tray carry-in unit 2. The abnormality detection unit 5 of the present embodiment is provided above the tray carry-in unit 2, and detects a missing egg in the tray T being carried in. An abnormality signal detected by the abnormality detection unit 5 is transmitted to the control unit 6.

The control unit 6 controls the tray carry-in unit 2, the stacking unit 3, and the tray carry-out unit 4 to cause a normal stacking operation and a forced discharge operation to be performed. Note that the control unit 6 includes a computer including a CPU, a memory, an input/output interface, an AD converter, and the like. Note that the control unit 6 may be configured by a physically integrated computer or may be configured by individual computers physically separated.

### <Normal stacking operation>

The normal stacking operation is an operation performed when the abnormality detection unit 5 has not detected an abnormality of the tray T, and is an operation of stacking the sequentially conveyed trays T in a predetermined number of layers and carrying out the trays T.

Specifically, the operation is as follows.

The tray moving unit 32 arranges the tray T carried in by the tray carry-in unit 2 to a predetermined receiving position on the upper surface of the stacking stage 31 or the uppermost layer of the trays T placed on the stacking stage 31. When this operation is repeated a predetermined number of times (for example, six times), a predetermined number (for example, six) of trays T are stacked on the stacking stage 31. Thereafter, the stacked-tray moving unit 33 moves the stacked trays T to the tray carry-out unit 4 by, for example, pushing the stacked trays T. Then, the tray carry-out unit 4 carries out the stacked trays T.

### <Forced discharge operation>

The forced discharge operation is an operation performed when the abnormality detection unit 5 has detected an abnormality of the tray T, and is an operation of arranging the tray T in which the abnormality is detected at the uppermost layer and carrying out the tray T, regardless of whether or not the trays T are stacked in predetermined number of layers.

Specifically, the operation is as follows.

When the abnormality detection unit 5 detects an abnormality of the tray T, the tray moving unit 32 arranges the tray T having the abnormality on the upper surface of the stacking stage 31 or the uppermost layer of the trays T placed on the stacking stage 31. After this operation, the stacked-tray moving unit 33 moves the tray(s) T on the stacking stage 31 to the tray carry-out unit 4, for example, by pushing the tray(s) T. Then, the tray carry-out unit 4 carries out the tray T having an abnormality or the stacked trays T in which the tray T having the abnormality is at the uppermost layer.

Hereinafter, a specific example of the forced discharge operation will be described.

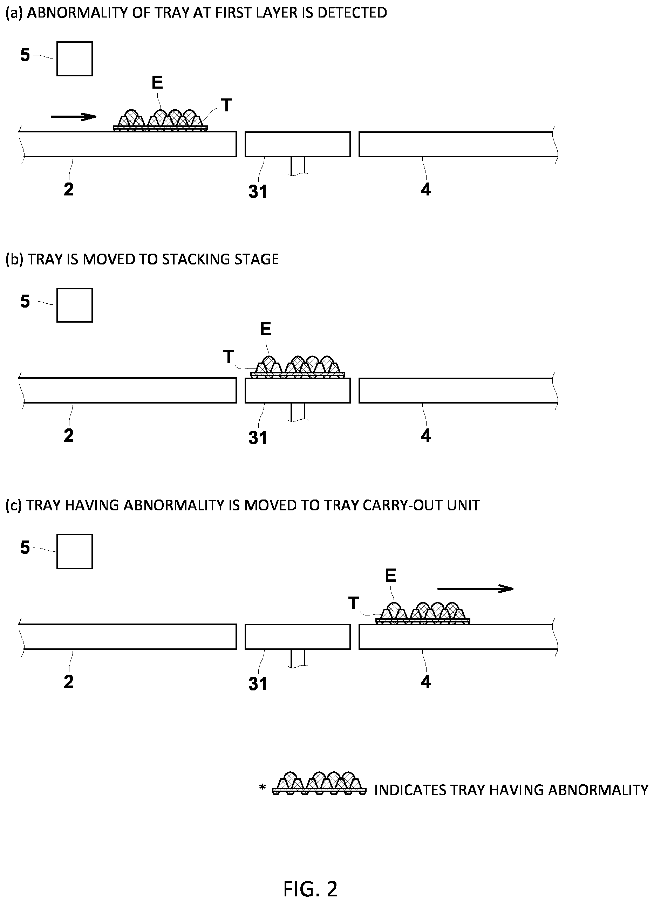

### (1) A case where there is an abnormality in the tray T at a first layer (see FIG. 2)

While this tray T is being carried in from the tray carry-in unit 2, the abnormality is detected by the abnormality detection unit 5 (see FIG. 2(a)). Then, the control unit 6 receives the abnormality signal. The control unit 6 controls the tray moving unit 32 of the stacking unit 3 to move the tray T having the abnormality to the upper surface of the stacking stage 31 (see FIG. 2(b)). Thereafter, the control unit 6 controls the stacked-tray moving unit 33 of the stacking unit 3 to move the tray T having the abnormality from the stacking stage 31 to the tray carry-out unit 4 (see FIG. 2(c)). As a result, only the tray T having the abnormality is carried out by the tray carry-out unit 4. Note that, in the forced discharge operation, the tray carry-in unit 2 and the tray carry-out unit 4 operate in the same manner as the normal stacking operation. Thereafter, the normal stacking operation is performed until an abnormality of the tray T being carried in is detected.

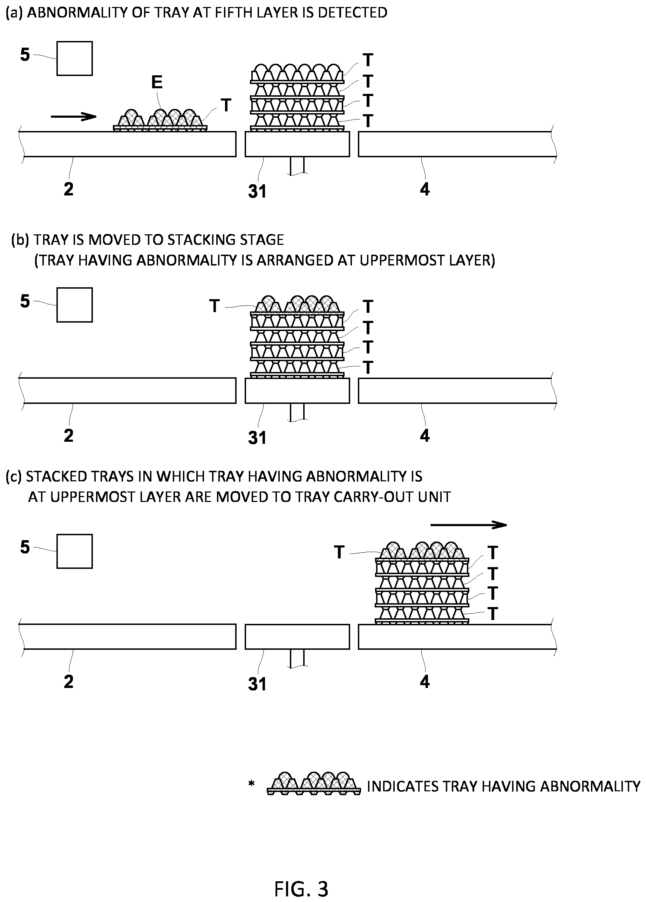

### (2) A case where there is an abnormality in the tray T in a second to sixth layers (see FIG. 3, the fifth layer in this figure)

While this tray T is being carried in from the tray carry-in unit 2, the abnormality is detected by the abnormality detection unit 5 (see FIG. 3(a)). Then, the control unit 6 receives the abnormality signal. The control unit 6 controls the tray moving unit 32 of the stacking unit 3 to move the tray T having the abnormality to the stacking stage 31. Then, the tray moving unit 32 stacks the tray T having the abnormality in the uppermost layer of the trays T already stacked in the stacking stage 31 (see FIG. 3(b)). Thereafter, the control unit 6 controls the stacked-tray moving unit 33 of the stacking unit 3 to move the stacked trays T in which the tray T having the abnormality is at the uppermost layer, from the stacking stage 31 to the tray carry-out unit 4 (see FIG. 3(c)). As a result, the stacked trays T in which the tray T having the abnormality is at the uppermost layer are carried out by the tray carry-out unit 4. Note that, in the forced discharge operation, the tray carry-in unit 2 and the tray carry-out unit 4 operate in the same manner as the normal stacking operation. Thereafter, the normal stacking operation is performed until an abnormality of the tray T being carried in is detected.

### <Effects of present embodiment>

According to the stacking device 100 of the present embodiment, since the tray T in which an abnormality is detected is arranged at the uppermost layer and carried out, the stacking of the trays T can be continuously performed without stopping the lines of the tray carry-in unit 2, the tray carry-out unit 4, and the like. In addition, since the lines of the tray carry-in unit 2, the tray carry-out unit 4, and the like are not stopped at the time of abnormality detection, the operation rate is improved. Further, the operator does not need to move to the tray carry-in unit 2, and time and effort are saved. In addition, since the tray T in which the abnormality is detected is arranged at the uppermost layer, it is possible to deal with the tray T in which the abnormality is detected in the stacked state, and the workability is improved.

### <Modified embodiment of present invention>

Note that the present invention is not limited to the above-described embodiment.

For example, in addition to the above-described embodiment, any method may be adopted as the stacking method of the stacking unit as long as the tray T in which an abnormality is detected is arranged at the uppermost layer. That is, the tray T is arranged and stacked under the tray T that is carried in immediately before in the normal stacking operation, while the tray T in which an abnormality is detected is arranged at the uppermost layer of the already stacked trays T when the abnormality of the tray T is detected.

Further, the abnormality detection unit 5 of the above-described embodiment detects egg omission of the tray T, but may detect an abnormality of the eggs E (for example, a crack egg, a broken egg, a dirty egg, and the like) contained in the tray T.

Further, the abnormality detection unit 5 may detect an abnormality of the tray T being conveyed in the tray carry-in unit 2, or may detect an abnormality of the tray T stopped at, for example, a predetermined receiving position or the like in the tray carry-in unit 2. Moreover, the abnormality detection unit 5 may detect an abnormality of the tray T being moved by the tray moving unit 32 of the stacking unit 3.

In addition, a configuration may be adopted including a notification unit that notifies the operator of an abnormality when the abnormality detection unit 5 detects the abnormality of the tray T or when the forced discharge operation of the tray T having the abnormality is performed. Examples of the notification unit include a configuration for emitting sound, a configuration for emitting light, and a configuration for performing display on a screen.

In addition, the tray carry-out unit 4 may include a distribution unit that distributes, to different paths, the tray T stacked in the normal stacking operation, and the tray T having an abnormality or the stacked trays T in which the tray T having an abnormality is at the uppermost layer that have been discharged in the forced discharge operation.

In addition, the present invention is not limited to the above-described embodiment, and it goes without saying that various modifications can be made without departing from the spirit of the present invention.

### Industrial Applicability

According to the present invention, it is possible to enable stacking of trays without stopping lines of the tray carry-in unit and the like even when an abnormality of the tray is detected.

### Reference Signs List

- 100: stacking device
- E: egg
- T: tray
- 2: tray carry-in unit
- 3: stacking unit
- 4: tray carry-out unit
- 5: abnormality detection unit
- 6: control unit

## Claims

1. A stacking device comprising:
a tray carry-in unit that carries in a tray containing a plurality of eggs;
a stacking unit that stacks, in a predetermined number of layers, the tray carried in by the tray carry-in unit;
a tray carry-out unit that carries out the tray stacked by the stacking unit in a predetermined number of layers; and
an abnormality detection unit that detects an abnormality of the tray carried into the stacking unit, wherein
when the abnormality detection unit detects an abnormality of the tray, the tray in which the abnormality is detected is arranged at an uppermost layer by the stacking unit and is carried out by the tray carry-out unit, regardless of whether or not the tray has been stacked in a predetermined number of layers.

2. The stacking device according to claim 1, wherein the stacking unit stacks the tray carried in by the tray carry-in unit, by arranging the tray on the tray that is carried in immediately before.
